# EUROPEAN PATENT SPECIFICATION

(11) **EP 0 517 287 B1**
(45) Date of publication and mention of the grant of the patent: **14.01.1998**
(21) Application number: 92114946.4
(22) Date of filing: 13.02.1987
(51) Int. Cl.: H01B 7/28, H01B 13/32, H01B 9/02

(54) **Filling composition for electrical cables, and method of making cables using the filling composition**
Füllzusammensetzung für elektrische Kabel und Methode zur Herstellung von Kabeln unter Verwendung der Füllzusammensetzung
Composition de remplissage pour câbles électriques et méthode de fabrication de ces câbles utilisant cette composition

(30) Priority: 16.05.1986 US 864196
(43) Date of publication of application: 09.12.1992
(62) Divisional of application: 87301262.9
(73) Proprietor: PIRELLI CABLE CORPORATION, Lexington, South Carolina 29072 (US)
(72) Inventor: Marciano-Agostinelli, Fabrizio, Columbia, South Carolina 29223 (US); Barbaro-Forleo, Marco, c/o Pirelli Cavi S.p.A., I-20126 Milan (IT)
(74) Representative: West, Alan Harry

(56) References cited:
- WO-A-80/00895
- FR-A- 2 378 337
- GB-A- 2 113 453
- US-A- 2 507 508
- US-A- 4 095 039
- US-A- 4 145 567

## Description

The present invention is concerned with a filling composition for electrical cables, particularly power transmission cables, and with the production of such cables.

It is known in the art that cable insulation is deteriorated by the development and propagation of water/chemical trees when moisture is present in regions of the insulation structure of the cable and particularly in regions of localised high electrical stress caused by voids, contaminants and protrusions from the conductor and insulation stress control layers. Water present in the spaces between the strands of a multi-stranded conductor is recognised as significantly accelerating the propagation of water/chemical in the insulation. It is therefore desirable to fill all spaces between such wires with a filling composition so as to minimize or prevent ingress and movement of water in such spaces. See, for example, US Patent 4,095,039; 4,104,480; 4,145,567 and 3,943,271.

As pointed out in U.S. Patent 4,095,039, some of the prior art filling compositions are not satisfactory after aging due to loss of adhesive qualities and hardening and fracturing thereof. That document describes the use of low molecular weight polyisobutylene rubber or a low molecular weight copolymer of isobutylene-isoprene rubber with 40-150 parts by weight of electrically conductive carbon black or graphite added thereto as a filling composition, such composition having a putty-like consistency at room temperature and good adhesiveness which is retained during operation of the cable.

Another advantage indicated by the use of the filling composition described in U.S. Patent 4,095,039 is that the filling composition can be applied by means of a pump supplying the composition to an applicator where the spaces between the wires are filled and the wires coated. This indicates that the composition is flowable and does not require high pressures for its application. This property eliminates the need for an extrusion head and the expense thereof which is necessary for some filling compositions which can be extruded over the wires.

U.S. Patent 4,145,567 describes a similar filling composition made of ethylene propylene rubber compounded with a substantial amount of carbon black so as to give it a putty-like consistency and a drip-point above 100°C.

It has been found that the filling compositions of U.S. Patents 4,095,039 and 4,145,567 are quite effective as filling compositions for stranded conductors of electrical cables, but it has also been found that some problems still exist from the standpoint of preventing ingress and flow of water in the conductor while preventing overfill of the spaces under the outer layer of wires. Thus it has been found that under some conditions, such as cable handling, subsequent manufacturing operations and after accelerated cyclic aging test simulating cyclic loading of the cable in the field, some ingress of water into the conductor and movement over a limited length of the conductor may occur, although a significant improvement has been achieved.

Furthermore, in the manufacturing operation of completely filling the spaces between the strands, the volume of filling composition is difficult to control and the extent of the fill can vary along the length of the stranded conductor. In this regard it should be recognised that normally the outer interstices of the stranded conductor are filled by the pressure extrusion of the conductor stress control layer and no supplemental filling of the spaces is required. Where the spaces between the outer layer of wires and the next to outer layer of wires is overfilled with filling composition, the extrusion of the semiconducting stress control layer over the stranded conductor can cause penetration of filling composition into the outer interstices of the conductor resulting in protrusion of the extruded semiconducting stress control layer into the insulation. Since such protrusions result in localized high electrical stresses in the insulation, such effects are highly undesirable. In some cases, it is considered desirable to also fill the outer interstices of the conductor with filling composition in which case a semiconducting rubber filled tape is applied lapped on itself over the completely filled conductor followed by extrusion of the semiconducting stress control layer. In this case, overfilling of the spaces between the outer layer of wires and the next to outer layer of wires is not objectionable and does not represent a problem.

The present invention seeks to improve the resistance to ingress and movement of water between and around the wires of an electrical cable conductor by providing an improved filling composition of the general type described in U.S. Patents 4,095,039 and 4,145,567.

According to the present invention, there is now provided a filling composition for filling the interstices between the conductively contacting strands of a multi-stranded conductor of an electrical cable, the composition comprising an adhesive mixture of a low molecular weight polymeric compound which has a 100 gram needle penetration value at 25°C of from 50 to 100 tenths of a millimetre, and particles of an organic water-swellable material having a particle size of not more than 200 µm.

According to the present invention, there is now provided also a method of making an electrical cable having a plurality of layers of conductive wires, which comprises bringing together the conductive wires and applying to at least the wires forming the inner layer(s) of the cable a filling composition as described above, extruding a layer of semi-conductive material around the outer layer of the wires, and extruding a layer of insulation around the layer of semi-conductive material.

In accordance with the invention, the polymeric component and the water-swellable component are mixed and applied together to the multi-stranded conductor.

The filling composition according to the invention is soft and flowable when applied and can be applied to the conductor without the use of extrusion equipment. The filling composition is applied to the conductor wires as they are brought together in concentric layers, except in most cases for the outer layer of wires, and thereafter the inner layers of wires with the filling composition therearound and therebetween and the outer surface of the conductor are covered by extrusion with a conventional semi-conducting stress control layer. In this case, the pressure extruded semi-conducting conductor stress control layer completely fills the interstices in the outer layer of wires. Where the outer interstices are filled with filling composition, a suitable semi-conducting rubber filled tape is applied with overlap over the completely composition-filled conductor followed by extrusion of the semi-conducting conductor stress control layer. A layer of extruded insulation is applied over the screening layer, and if desired, further conventional layers, such as another semi-conductive screening layer or a metal shield, may be applied over the layer of insulation.

The filling composition may be applied to the conductor wires in known manner, that is without extruding it thereover, but in a preferred method of the invention, the composition is applied to each layer of wires in a known manner so that it fills all spaces between the inner layers of wires and the layer of wires applied thereto. As the overlying layer of previously uncoated wires is applied, the inner spaces between these wires and the wires coated with the polymeric component and the fine particles of swellable material are filled by transfer from the underlying filled layer of wires. The filled and coated layers of wires, except for the outer interstices and surface of the outermost layer of wires which normally are not filled or coated pass through a final closing die which places all wires and layers in intimate contact with each other. The conventional semi-conducting conductor stress control layer, insulation, etc. are subsequently extruded over the conductor. In this way the semi-conducting conductor stress control layer fills all outer interstices in the outer layer of wires. Of course, any spaces between the inner wires and the outer wires are filled by the polymeric component.

In addition to incorporating the water-swellable component in the filling composition applied over each layer of wires, the water-swellable component may be applied additionally as a fine layer of particles to one or more of the layers of filling composition applied over each layer of wires. Thus as the polymeric component is applied over a layer of wires, it may be exposed to the fine particles of swellable material, such as by passing the filled layer through a trough containing such particles which are pneumatically agitated or blown about, so that such particles adhere to any polymeric component exposed thereto.

For the better understanding of the invention, preferred embodiments thereof will now be described by way of example, with reference to the accompanying drawings, in which:
Figure 1 is a block diagram illustrating one method of making cable according to the invention;
Figure 2 is a cut-away perspective view of a first embodiment of cable according to the invention;
Figure 3 is a similar view of a second embodiment of cable; and
Figure 4 is a similar view of a third embodiment of cable.

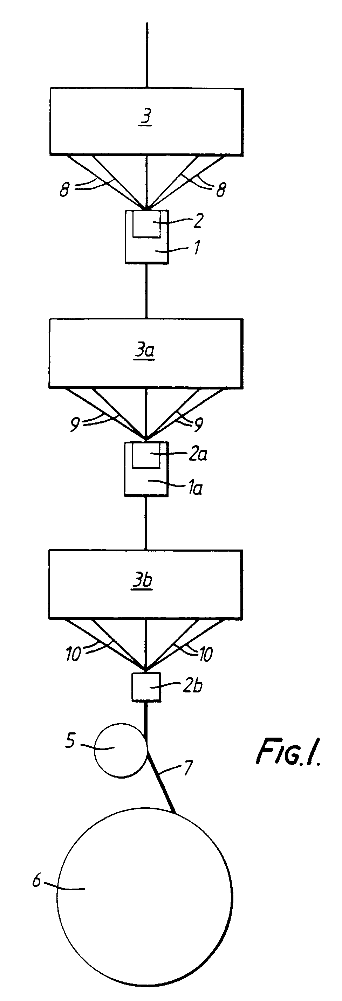

Figure 1 is a block diagram illustrating the steps of the preferred embodiment of the method of the invention in which the polymeric component and the water-swellable component are applied to only the inner layers of a stranded conductor 7. A plurality of wires 8 carried on a conventional wire cage 3 are pulled and stranded and enter a closing die 2. During the stranding, the filling composition comprising the polymeric component and the particles of the water-swellable material admixed therein, is applied around the wires at an applicator 1. If desired, the particles of the water-swellable material are additionally separately applied to the filling composition on the wires, such as by passing the coated wires through a suitable conventional powder applicator. However, such separate application of the particles may be omitted.

The next layer of wires 9 are similarly stranded over the first layer of wires by a wire cage 3a and are similarly coated with the filling composition at a closing die 2a and an applicator 1a.

The next layer of wires 10 is similarly stranded over the first two layers of wires by a wire cage 3b and pulled through a closing die 2b. However, in this preferred method, the filling composition is not applied to the wires forming the outer layer.

The wire assembly or conductor 7 is pulled by a pull out capstan 5 and the conductor 7 is collected on a take-up reel 6. The conductor 7 is drawn off the reel 6 at a conventional extrusion line where the semi-conductive screens and insulation are extruded over the conductor and, if desired, other layers of materials are applied. In the case where the filling composition is applied to the wires 10, the conductor 7 may have a layer of semi-conductive tape applied thereto prior to the application of the first semi-conductive screen or stress control layer.

If desired, the filling composition comprising the polymeric component and the particles may also be applied to the wires 10 forming the outer layer in the same manner as it is applied to the wires forming the inner layers. In this case, provided that there is proper control of the quantity of filling composition, the screening layer may be applied directly to the outer surface of the conductor 7, but preferably a layer of semi-conducting tape is applied over the conductor 7 before the screening layer is applied.

Although only three layers of wires have been illustrated, it will be apparent that there may be only two layers or more than three layers of wire.

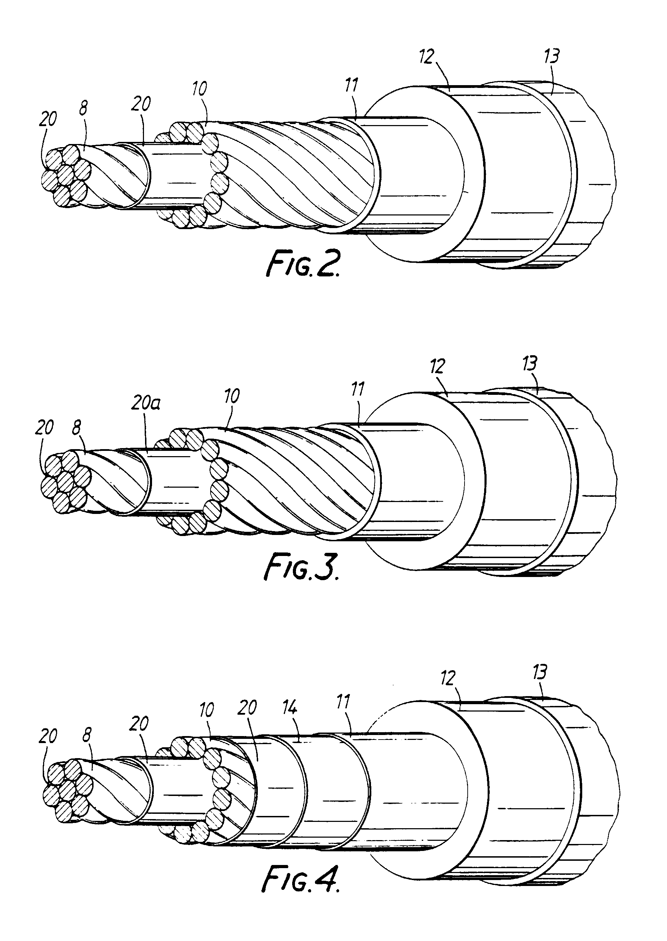

Figure 2 illustrates a cable with inner wires, e.g. wires 8, with the filling composition 20 comprising polymeric component and admixed particles thereon and filling any interstices therebetween. The filling composition 20 has not been applied to the outer wires 10, the outer interstices of which are filled with a layer 11 of semi-conductive material. The layer 11 is covered by a layer 12 of insulating material which, in turn, is covered by a layer 13 of semi-conductive material. In this embodiment, as in the other embodiments, other layers of material may surround the layer 13.

Figure 3 illustrates a cable similar to the cable shown in Figure 2 except that particles 20a of the water-swellable material are applied to the surface of the filling composition 20 applied to the inner wires 8.

Figure 4 illustrates a cable similar to the cables shown in Figures 2 and 3 except that the outer wires 10 are also covered with, and the interstices therebetween are filled with, the filling composition 20 and except for the addition of a layer of semi-conducting semi-conducting tape 14 between the wires 10 and the screen 11.

The polymeric component of the filling composition of the invention is a polymer which can be readily pumped at elevated temperatures above 100°C. Normally, this means that the polymer will be a low molecular weight polymer, such as low molecular weight polyisobutylene rubber, isobutylene-isoprene copolymer rubber, or ethylene-propylene copolymer rubber, or a mixture of two or more thereof. The polymeric component may, for example, be an ethylene-propylene rubber compounded with a substantial amount of carbon black as described in U.S. Patents 4,095,039 and 4,145,567, or other suitable mineral fillers. Other polymers having suitable characteristics will be apparent to those skilled in the art. A polymer which has been found to be particularly suitable is low molecular weight LM polyisobutylene sold by Exxon Chemical Americas, P.O. Box 3272, Houston, Texas under the Trade Mark VISTANEX.

The polymeric component should not have any significant Shore A hardness. A test for determining whether or not the base polymer has acceptable properties is the Penetrometer Test incorporated in ASTM D5 Penetration of Bituminous Materials; as previously stated, the 100 grams needle penetration value at 25°C of the polymeric compound should be from 50 to 100 tenths of a millimetre.

The water-swellable component of the filling composition preferably has the following properties or characteristics:
a) the powder should be substantially insoluble in water;
b) the pH of an aqueous dispersion of the powder obtainable by dispersing 1 gr of powder in 200 cm³ of bi-distilled water should be in the range from 6.5 to 7.5;
c) the weight loss of the powder after heating at 105°C should be less than 7%;
d) the powder wetting time (corresponding to the time lapse between the moment the powder is put in contact with water and the moment at which the expansion and swelling begins) should be in the range of less than 1 to 10 seconds whether the water is tap water, industrial use water, or sea water;
e) the powder water absorbing capability expressed in cm³ of water absorbed by 1 gr of powder should be in the range from 10 to 800 cm³/gr. or greater. In particular, the powder capability in relation to industrial water should be in the range from 200 to 800 cm³/gr or greater, while its capability for the absorption of sea water should be in the range from 10 to 150 cm³/gr or greater; and
f) the particle size of the powder should be less than 200 microns and, more preferably, at least 50% of the particles of such powder should have sizes less than 150 microns.

Suitable water-swellable particle materials are, for example, polyacrylates and polyacrylamides, by themselves or copolymerised with natural polymers, such as amides, cellulose esters, such as methyl cellulose, and cellulose ethers, such as carboxymethyl cellulose. A material which has been found to be especially suitable is the Type J-550 sodium polyacrylate sold by the Grain Processing Corporation, Muscatine, Iowa.

The weight of the water-swellable component to the weight of the polymeric component (PHR) may vary over a fairly wide range, as long as the former is present in an amount which provides the desired result which can be determined empirically. Normally, the powder will be present in an amount of at least 0.5 PHR to not more than 50 PHR and, preferably, is present in an amount in the range from 0.5 PHR to 20 PHR.

In the preferred embodiments of the invention, the polymeric component is a composition comprising low molecular weight polyisobutylene rubber or low molecular weight isobutylene-isoprene copolymer rubber. To either of these isobutylene rubber materials, 15 to 150, more preferably 15 to 50, parts by weight of electrical conductive carbon black or graphite material or non-conductive mineral filler, such as silica, talc, titanium dioxide, clay, is added for each 100 parts of the isobutylene rubber material.

The addition of the carbon makes the filler composition semi-conductive. The addition of the carbon or non-conductive mineral fillers serves an important function in that it prevents flow of the isobutylene rubber material at temperatures up to 200°C. Thus the filler composition can withstand the temperatures encountered during heavy loads on power transmission lines without softening and having its viscosity become so low that it will flow out of the cable at cable ends or flow lengthwise where the cable is on a substantial slope.

Some additional material can be added, if necessary, as a processing aid; for example, a hydrocarbon oil, such as used in rubber compounding, or a chlorinated paraffin or isobutylene liquid plasticizer can be used to bring the isobutylene rubber compound to a pumping consistency without using excessive heat. It is preferable, however, to use as little processing aid as possible or none at all when it is not necessary for obtaining a pumping consistency. The disadvantage of processing aids is that they may migrate into the insulation shield and cause swelling and a consequent reduction in the conductivity of the shield.

When particles of the water-swellable component are applied as a thin layer over one, several or all layers of the polymeric component applied over the concentric layers of wires, the thickness of the powder layer should generally be from several tens to several hundreds of microns.

The polymeric component is of a putty-like consistency at room temperatures and it has good adhesiveness. One of the outstanding advantages of the polymeric component is its retention of adhesiveness in spite of repeated heating and cooling resulting from load cycling of high voltage power transmission cables. It is essential for a filler composition to retain both its flexibility and its adhesiveness in order to be satisfactory. If the composition becomes brittle, it will separate easily from an adjacent face of the material or fracture as the result of expansion and contraction of the cable.

The filling composition of the invention by virtue of particles of water-swellable component being included in the mixture and optionally applied as a thin layer over the filling composition serves as a more effective block against ingress and movement of the water and permits underfilling of the spaces between the outer layer of wires and the next to outer layer of wires thus minimizing the risk of penetration of the filling composition into the outer interstices of the conductor during extrusion of the semi-conducting conductor stress control layer causing objectionable protrusions of this layer into the insulation while still blocking ingress of and movement of water through the conductor.

For use between the outer interstices of the stranded conductor and the conductor shield, the filler composition of this invention must be semi-conductive and also retain its resistivity. The volume resistivity of the filling composition applied, as above described, preferably does not exceed 50,000 ohm-centimetres, a value established by the cable industry for semi-conductive material used in cables.

The filling composition of this invention is not intended as a replacement for the conductor shield. Its primary purpose is to provide an adhesive filler that adheres to the conductor and to the inside surface of the conductor shield. If the conductor is stranded, as is usually the case, then the filling composition eliminates voids in spaces between the strands of the conductor.

A method of making an electrical cable having a plurality of layers of conductive wires which comprises bringing together the conductive wires and applying to at least the wires forming the inner layer(s) of the cable the low molecular weight polymeric compound, applying to the polymeric compound particles of the organic water-swellable material, extruding a layer of semi-conductive material around the outer layer of the wires, and extruding a layer of insulation around the layer of semi-conductive material, is described and claimed in co-pending patent application no. 87301262.9 (publication no. 0246726) from which the present application has been divided.

## Claims

1. A filling composition (20) for filling the interstices between the conductively contacting strands of a multi-stranded conductor of an electrical cable, the composition comprising an adhesive mixture of a low molecular weight polymeric compound which has a 100 gram needle penetration value at 250C of from 50 to 100 tenths of a millimetre, and particles of an organic water-swellable material having a particle size of not more than 200 µm.

2. A filling composition according to claim 1, wherein the low molecular weight polymeric compound is a low molecular weight polyisobutylene rubber, isobutylene-isoprene copolymer rubber, ethylene-propylene rubber, or a mixture of two or more thereof.

3. A filling composition according to claim 1 or claim 2, wherein the organic water-swellable material is a polyacrylate or polyacrylamide, as such or copolymerised with a natural polymer, or a cellulose ether or cellulose ester.

4. A filling compositions according to any one of claims 1 to 3, wherein the water-swellable material is sodium polyacrylate.

5. A method of making an electrical cable having a plurality of layers of conductive wires (8,9,10), which comprises bringing together the conductive wires and applying to at least the wires (8,9) forming the inner layer(s) of the cable a filling composition (20) according to any one of claims 1 to 4, extruding a layer (11) of semi-conductive material around the outer layer of the wires (10), and extruding a layer (12) of insulation around the layer of semi-conductive material.

6. A method according to claim 5, which comprises bringing together the conductive wires in a plurality of concentric layers and applying the filling composition (20) to all but the outer layer of wires (10) so that the latter is free of the filling composition on the radially outer surface thereof and the interstices between the wires (8) of the respective layers are filled with the filling composition.

7. A method according to claim 5, wherein the filling composition is applied to all the layers of wires.

8. A method according to any one of claims 5 to 7, which comprises also applying separately to the filling composition particles (20a) of the organic water-swellable material.

9. A method according to claim 7 or claim 8, wherein before extruding the layer (11) of semi-conductive material around the outer layer of wires, the outer layer is wrapped with a layer (14) of a semi-conductive tape.

## Patentansprüche

1. Füllzusammensetzung (20) zum Füllen der Zwischenräume zwischen den sich leitend berührenden Litzen eines mehrlitzigen Leiters eines elektrischen Kabels, wobei die Zusammensetzung eine Klebstoffmischung aus einer polymeren Mischung mit einem niedrigen Molekulargewicht aufweist, die einen 100-Gramm-Nadeleindringwert bei 25°C von 50 bis 100 Zehntel eines Millimeters und Teilchen eines organischen wasserquellfähigen Materials mit einer Teilchengröße von nicht mehr als 200 µm hat.

2. Füllzusammensetzung nach Anspruch 1, bei welcher die polymere Mischung mit niedrigem Molekulargewicht ein Polyisobutylenkautschuk mit niedrigem Molekulargewicht, ein Isobutylen-Isopren-Copolymerkautschuk, ein Ethylen-Propylen-Kautschuk oder eine Mischung aus zwei oder mehr dieser Kautschuke ist.

3. Füllzusammensetzung nach Anspruch 1 oder Anspruch 2, bei welcher das organische wasserquellfähige Material ein Polyacrylat oder Polyacrylamid als solches oder copolymerisiert mit einem natürlichen Polymer oder ein Celluloseether oder Celluloseester ist.

4. Füllzusammensetzung nach einem der Ansprüche 1 bis 3, bei welcher das wasserquellfähige Material Natriumpolyacrylat ist.

5. Verfahren zum Herstellen eines elektrischen Kabels mit einer Vielzahl von Schichten aus leitenden Drähten (8, 9, 10), welches das Zusammenbringen der leitenden Drähte und das Aufbringen einer Füllzusammensetzung (20) nach einem der Ansprüche 1 bis 4 auf wenigstens die Drähte (8, 9), die die innerste(n) Schicht(en) des Kabels bilden, das Extrudieren einer Schicht (11) aus halbleitendem Material um die äußere Schicht der Drähte (10) herum und das Extrudieren einer Schicht (12) einer Isolation um die Schicht des halbleitenden Materials herum aufweist.

6. Verfahren nach Anspruch 5, welches das Zusammenbringen der leitenden Drähte in einer Vielzahl von konzentrischen Schichten und das Aufbringen der Füllzusammensetzung (20) auf alle Schichten außer der äußeren Schicht von Drähten (10) aufweist, so daß die letztere frei von der Füllzusammensetzung auf ihrer radial äußeren Oberfläche ist und die Zwischenräume zwischen den Drähten (8) der jeweiligen Schichten mit der Füllzusammensetzung gefüllt sind.

7. Verfahren nach Anspruch 5, bei welchem die Füllzusammensetzung auf alle Schichten von Drähten aufgebracht wird.

8. Verfahren nach einem der Ansprüche 5 bis 7, welches auch das separate Aufbringen von Teilchen (20a) des organischen wasserquellfähigen Materials auf die Füllzusammensetzung aufweist.

9. Verfahren nach Anspruch 7 oder Anspruch 8, bei welchem vor dem Extrudieren der Schicht (11) aus halbleitendem Material um die äußere Schicht von Drähten herum die äußere Schicht mit einer Schicht (14) von halbleitendem Band umwickelt wird.

## Revendications

1. Composition de remplissage (20) pour remplir les interstices entre les brins conducteurs qui sont en contact d'un conducteur multibrin d'un câble électrique, la composition comprenant un mélange adhésif d'un composé polymérique de faible masse moléculaire qui présente une valeur de pénétration avec une aiguille de 100 g à 25° C, comprise entre 50 et 100 dixièmes d'un millimètre, et des particules d'un matériau organique gonflable dans l'eau présentant une taille de particule ne dépassant pas 200 µm.

2. Composition de remplissage conforme à la revendication 1, dans laquelle le composé polymérique de faible masse moléculaire est un caoutchouc polyisobutylène de faible masse moléculaire, un caoutchouc copolymère isobutylène/isoprène, un caoutchouc éthylène/propylène ou un mélange de deux de ces composés ou plus.

3. Composition de remplissage conforme à la revendication 1 ou 2, dans laquelle le matériau organique gonflable dans l'eau est un polyacrylate ou un polyacrylamide, tel quel ou copolymérisé avec un polymère naturel ou un éther de cellulose ou un ester de cellulose.

4. Composition de remplissage conforme à l'une quelconque des revendications 1 à 3, dans laquelle le matériau gonflable dans l'eau est le polyacrylate de sodium.

5. Procédé de fabrication d'un câble électrique présentant une pluralité de couches de fils métalliques conducteurs (8, 9, 10), qui comprend la réunion des fils métalliques conducteurs et l'application tout au moins aux fils métalliques (8, 9) formant la ou les couches internes du câble, d'une composition de remplissage (20) conforme à l'une quelconque des revendications 1 à 4, l'extrusion d'une couche (11) de matériau semiconducteur autour de la couche externe des fils métalliques (10), et l'extrusion d'une couche (12) d'isolation autour de la couche de matériau semi-conducteur.

6. Procédé conforme à la revendication 5, qui comprend la réunion des fils métalliques conducteurs dans une pluralité de couches concentriques et l'application de la composition de remplissage (20) à toutes les couches sauf la couche externe des fils métalliques (10) de sorte que la dernière soit exempte de la composition de remplissage sur la surface radialement externe de ces derniers et que les interstices compris entre les fils métalliques (8) des couches respectives soient remplis avec la composition de remplissage.

7. Procédé conforme à la revendication 5, dans lequel la composition de remplissage est appliquée à toutes les couches de fils métalliques.

8. Procédé conforme à l'une quelconque des revendications 5 à 7, qui comprend également l'application séparée de particules (20a) du matériau organique gonflable dans l'eau sur la composition de remplissage.

9. Procédé conforme à la revendication 7 ou 8, dans lequel, avant l'extrusion de la couche (11) du matériau semiconducteur autour de la couche externe de fils métalliques, la couche externe est enveloppée par une couche (14) d'une bande semi-conductrice.
